# EUROPEAN PATENT SPECIFICATION

(11) **EP 0 544 361 B1**
(45) Date of publication and mention of the grant of the patent: **31.01.1996**
(21) Application number: 92203551.4
(22) Date of filing: 18.11.1992
(51) Int. Cl.: B60P 3/355

(54) **Collapsible caravan**
Zusammenklappbarer Wohnwagen
Caravane pliante

(30) Priority: 19.11.1991 NL 9101928
(43) Date of publication of application: 02.06.1993
(73) Proprietor: Holtkamp, Egbert Berend, NL-9561 JK Ter Apel (NL)
(72) Inventor: Holtkamp, Egbert Berend, NL-9561 JK Ter Apel (NL)
(74) Representative: Smulders, Theodorus A.H.J., Ir.

(56) References cited:
- FR-A- 1 241 233
- NL-A- 7 710 669
- US-A- 3 144 150
- US-A- 4 133 577

## Description

The invention relates to a caravan comprising a chassis provided with a drawbar and wheels and a body mounted on the chassis which body has a frame of tubes and/or profiles and a suitable cloth which is at least partly fastened to the frame in a detachable manner for forming closed body surfaces, the body in use being mounted on the chassis in a detachable manner.

Such caravans are known in many different constructions, both as an ordinary, non-collapsible caravan, and as a folding caravan. In a folding caravan, the body consists of a box adapted to accommodate an assembly of tent cloth and tent poles folded up in the box, which assembly can be unfolded for forming a camping shelter. As an example reference can be made to applicant's folding caravans known by the name of Holtkamper and described in Dutch patent application No. 7710669.

Although in practice the known caravans are generally satisfactory, all caravans, whether or not of the folding type, present the problem that storing or otherwise putting away the (folding) caravan requires considerable space. A similar problem occurs in the transportation of (folding) caravans from the manufacturer to his buyers.

FR-A-1241233 discloses a caravan of the above described type having a chassis and a body wherein a part of the body is detachably mounted on the chassis. Another part of the body is also part of the chassis and is welded to the chassis. The detachably mounted upper part of the body has a frame covered with suitable cloth. The frame, even when detached from the chassis is still rather bulky. This is also true for the chassis including the lower part of the body.

Hence, there is a need for a folding caravan which can be collapsed to a greater extent than the known folding caravans, or for a collapsible caravan. The object of the invention is to provide for the need outlined. To that end, according to the invention, a caravan of the type described above is characterized in that the frame is constructed from tubes and/or profiles which are detachably connected so as to form a frame which can be disassembled.

The invention will be further described hereinafter with reference to the accompanying drawings of an exemplary embodiment.
Figure 1 schematically shows in side view a practical example of a folding caravan according to the invention;
Figure 2 schematically shows in top view a practical example of a folding caravan according to the invention;
Figure 3 shows a cross-section taken on the line III-III in Figure 2;
Figure 4 shows in side view a detail of a folding caravan according to the invention;
Figure 5 shows a section taken on the line V-V in Figure 4;
Figure 6 schematically shows a view of a touring caravan constructed according to the invention; and
Figure 7 and Figure 8 schematically show a variant of the invention.

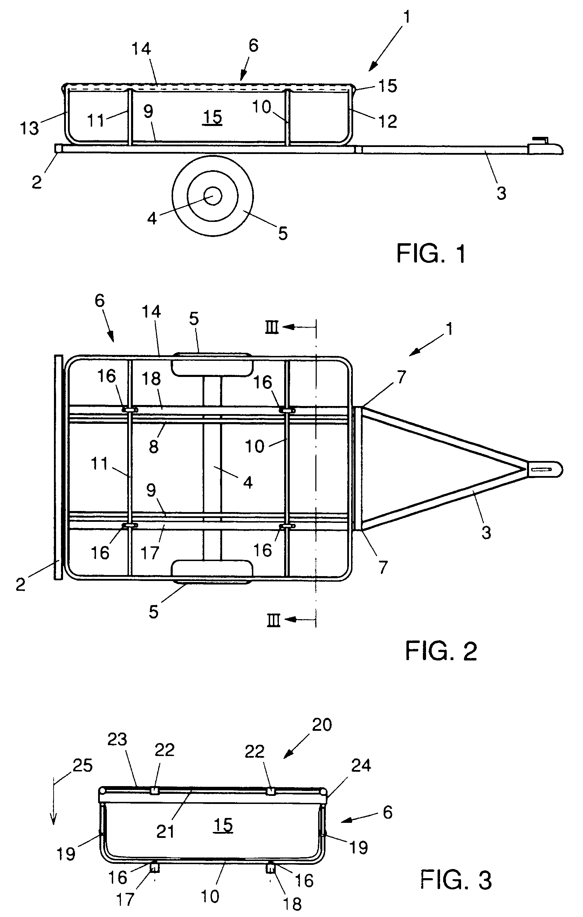

Figure 1 schematically shows in side view a practical example of a folding caravan 1 according to the invention, having a chassis 2 comprising a drawbar 3, a wheel axle 4 and wheels 5. The folding caravan shown further has a box 6, which, contrary to the conventional boxes of caravans, is not constructed of rigid panels, but of a framework of tubes, which has been covered with a suitable sail canvas. As is clearly shown in the top view of Figure 2, the framework in the example shown comprises two tubes 8,9, extending in the longitudinal direction of the chassis and two tubes 10,11 extending in transverse direction. Both in longitudinal direction and in transverse direction, a different number of tubes can be used. The cloth is not shown in Figure 2.

Each of tubes 8-11 has upwardly bent ends, forming substantially vertical sections, all terminating at substantially the same distance above the chassis. In Figure 1 vertical sections 12,13 of tube 9 are visible, as well as the vertical sections of tubes 10 and 11.

Mounted on the free ends of the vertical sections is a circumferential tubular frame 14, forming the edge of the box. In the example shown frame 14 has a rectangular shape with rounded corners. Frame 14 further comprises a tub 15, formed from suitable cloth, having such dimensions that the tub snugly fits into the space enclosed by tubes 8-11 and the upwardly bent ends thereof. The edges of the cloth which forms the tub are fastened to the tubes of frame 14. To this end, the edges could for instance be provided with loops through which extend the tubes. It is also possible to fold the edges over the tubes of frame 14 throughout the length thereof and subsequently fasten them to the cloth again, for instance by means of a number of press-studs or one or more zippers, or by sewing or welding.

As cloth, preferably a heavy-quality sail canvas is used, as is also conventional for tarpaulins of trucks. Such tarpaulins are at least partly made of synthetic material and very strong. Such a cloth can also be welded.

The tubes, forming the box of the folding caravan together with the cloth, can each consist of a number of telescopic sections in the manner conventional for tent poles. Also, where the longitudinally extending tubes intersect the transversely extending tubes, the conventional fittings can be used for detachably joining the intersecting tubes together. Alternatively, a joint by means of a through bolt with a nut can be used.

In the example shown tubes 10 and 11 are detachably mounted on chassis beams 17,18 by means of clips 16 and bolts or screws.

Figure 3 schematically shows a cross-section taken on the line III-III in Figure 2, in which the wheel axle and the wheels have been omitted. In the example of Figure 3, tub 15 is suspended within the framework formed by the tubes. In principle, it is also possible to arrange the tub on the outside of the tubes, but this requires the provision of holes through the material of the tub for mounting the framework on the chassis. If it is desired to have a waterproof tub, such holes can be problematic.

Further, if so desired, the tub can be fixed to the framework at a number of places by means of straps, loops or the like, as is shown by way of example at 19 in Figure 3.

Further, Figure 3 shows a cover 20 with which the box can be covered. Like box 6, cover 20 is constructed of a framework formed by tubes and cloth. In the example shown, the framework only comprises a circumferential tubular frame 21, which can be identical to tubular frame 14 forming the edge of the box. The tubular frame can for instance be constructed of two straight, longitudinally extending tubes and two straight, transversely extending tubes and four bent corner pieces. Frame 21 can be attached to a substantially flat cloth 23 by means of loops, as shown at 22, straps or by means of a flap folded over one of the tubes and subsequently fixed by means of zippers or press-studs or the like.

Preferably, cloth 23 has a circumferential edge 24, depending over frame 21. Cover 20 in Figure 3 is drawn slightly above the completely closed position, and can be moved downwards somewhat, as indicated by arrows 25, so as to close the box properly. In closed position, frame 21 of the cover rests on edge 14 of the box in this example. It is also possible to have frame 21 fit around the edge of the box.

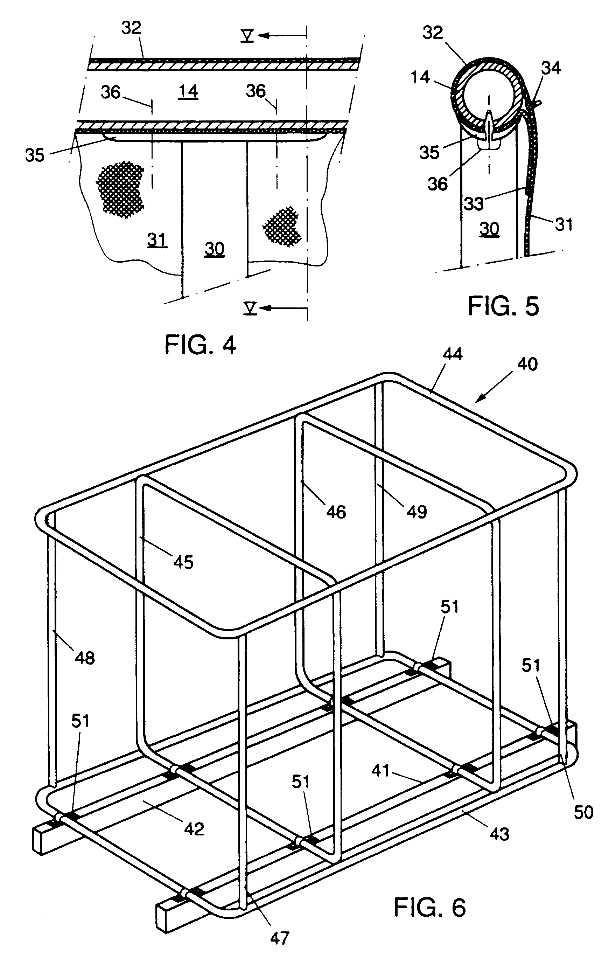

Figures 4 and 5 schematically show, by way of example, how edge 14 of the box could be mounted on the ends of the vertical sections of the longitudinally and transversely extending tubes.

Figures 4 and 5 show a portion of tube 14 forming the edge and a portion of a vertical section 30 of one of the tubes forming the framework of the box. Further, a portion of sidewall 31 of tub 15 is shown. In this example, sidewall 31 is folded around tube 14 by an upper edge section 32. In this example, the sidewall is provided with a sewn or welded flap 33 at some distance below the upper edge, provided with one half of a zipper 34 or Velcro fastener or the like, of which the other half is attached to the free end of the upper edge. Consequently, tube 14 is disposed in a closed sleeve of cloth, as it were.

Vertical section 30 comprises at the top thereof a transversely extending, horizontal support 35 with a surface facing tube 14, curved approximately concentrically with tube 14. The support can for instance be formed from a wall portion of a tube of a suitable diameter and mounted on the end of vertical section 30 by means of welding or in a different suitable manner.
In the example shown, support 35 is screwed to tube 14 by means of screws, for instance self-tapping screws, as indicated at 36. Located between the support and tube 14 in the example shown is cloth 31 and the screws extend through the cloth. If so desired, it is also possible to make holes in the cloth at the position of the supports.

Instead of the supports shown, the conventional T-pieces could also be used. In that case, a suitable hole must be present in the cloth. Inside the box, a plate material (not shown) may be arranged as a bottom, for instance a plywood plate. Further, the foldable tent (not shown) of the folding caravan can be attached to edge 14 of the box in a conventional manner.

As appears from the foregoing, the box of a folding caravan according to the invention can be detached from the chassis in a simple manner and subsequently be disassembled in the manner of a tent, so that only a number of tube sections, a foldable packet of canvas and some fittings remain. The same applies to cover 20.

Consequently, storing or transporting such a folding caravan requires relatively little space.

The space required can be reduced still further, for instance by detachably or foldably mounting drawbar 3 on the chassis. The connection indicated in Figure 2 at 7 could for instance be detachable. Further, axle 4 can be detachably mounted on the chassis, but in itself this is not uncommon. Of course, the wheels are detachable as well.

The above-described normally fixed and rigid construction of a tubular frame and cloth can be used not only for folding caravans but also for "ordinary" caravans. The body of an "ordinary" caravan, i.e. a caravan not intended to be coupled to a car in collapsed condition like a folding caravan so as to be conveyed to a holiday destination, can also be constructed of tubes and suitable cloth.

By way of example, Figure 6 shows a tubular frame 40 for the body of a caravan. Of the chassis of the caravan, only two longitudinal chassis beams 41,42 are schematically shown. In the example shown, the tubular frame, again constructed of tube sections the ends of which can be slid into each other or otherwise adapted to be interconnected and of fittings, in a manner conventional for tents and the like, comprises two substantially rectangular horizontal frames 43,44, positioned one above the other. Provided between the horizontal frames are two vertical frames 45,46, likewise approximately rectangular. The horizontal and vertical frames in the example shown have rounded corners. Further, near the corners of the horizontal frames in this example uprights 47-50 are provided.

In the example shown, the lower horizontal frame and the bottom portions of the vertical frames are mounted on the chassis beams by means of clips 51.

As cloth, preferably a heavy-quality canvas is used, and the cloth may comprise a heat-insulating layer. Further, windows and an entrance door can be provided in a manner conventional for tents. It is also possible to provide windows and doors as are conventional in a caravan between vertical frames, such as for instance 45 and 46. For providing windows and doors, use can be made of frames, aluminium profiles or Velcro fasteners. The bottom can be formed by one or more detachable pieces of plate material. Accessories, cupboards and the like can be attached to the tubular frame and/or rest on the bottom.

The body of such a caravan can be disassembled again completely for transport over long distances or for storage for a longer time, so that only a packet of canvas and a packet of tubes and fittings remain.

Particular parts of a (folding) caravan according to the invention could optionally be constructed such that normally the cloth and the tubes remain interconnected, also when the (folding) caravan is disassembled.

It is observed that after the foregoing, various modifications will readily occur to a person of ordinary skill in the art. For instance, a different number of transverse or longitudinal tubes can be chosen or a different number of horizontal or vertical frames. Further, the tubes could also at least partly constitute the chassis on which the axle with wheels is mounted. Also, for a caravan the vertical frames could extend in the longitudinal direction of the caravan. Further, the vertical frames or the standards could have a slightly bent shape. Furher, a combination is possible of fixed wall parts and wall parts constructed according to the invention. Also, a trailer for transporting luggage, for instance, could be made in the manner described. The part of a folding caravan shown in Figures 1 and 2 is usable as a (luggage) trailer without any problem. The cover of such a trailer or folding caravan can be a loose cover or can be hingedly mounted on the edge of the box.

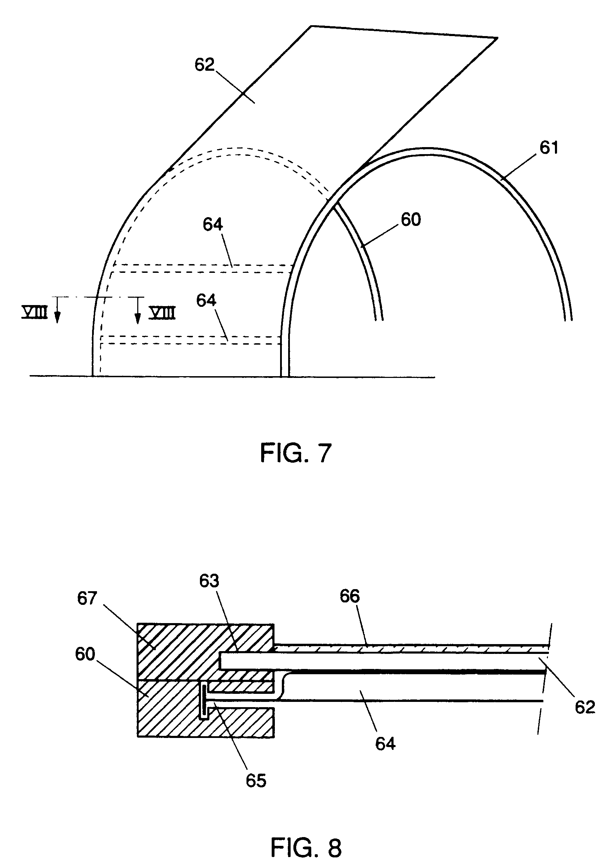

Further, instead of tubes, suitable profiles can be used, made of aluminium, for instance. When profiles with a longitudinal slot are used, cloth or even a pliable and/or rollable plate material could be fitted between two profiles to form a wall (part). Figure 7 shows, by way of example, two arches 60,61 formed from profile material, between which a panel 62 of pliable plate material is fitted. The panel can have its longitudinal edges mounted in slots 63 of the profiles, as shown in Figure 8 by way of example. In Figure 7 the plate material is already partly fixed to profiles 60,61 by means of transverse ribs 64, but the top part is not yet fixed to the profiles.

Figure 8 shows, by way of example, how the transverse ribs 64 can be secured to the profiles. Transverse ribs 64 have a T-shaped end, snugly fitting into a T-shaped slot 65 in the profiles. The T-shaped slot is positioned such that the transverse ribs keep plate 62 in the desired shape. By sliding the transverse ribs from slot 65 the plate can be detached. Other methods of attaching a pliable plate are conceivable. If so desired, the plate can be provided with an insulating layer 66. The profiles can be made partly or wholly of synthetic material, as schematically indicated at 67, so as to avoid cold bridges.

Finally, it is observed that a caravan according to the invention and in particular a folding caravan or a trailer according to the invention can also be constructed of loose panels which may or may not be made up of tubes or profiles and cloth or plate material. Accordingly, the loose panels are detachably interconnected and can simply be detached and stored as plates.

These and similar modifications are understood to fall within the scope of the invention as defined by the appended claims.

## Claims

1. A caravan (1) comprising a chassis (2,18,17;41,42) provided with a drawbar (3) and wheels (5) and a body (6;40) mounted on the chassis which body has a frame (8-14;21;40) of tubes and/or profiles and a suitable cloth (23,31) which is at least partly fastened to the frame in a detachable manner for forming closed body surfaces, the body in use being mounted on the chassis in a detachable manner, characterized in that the frame (8-14;21;40) is constructed from tubes and/or profiles which are detachably connected so as to form a frame which can be disassembled.

2. A caravan according to claim 1, characterized in that the cloth (23,31) and the tubes or profiles of the frame (8-14;21;40) are at least partly interconnected by means of loops (22) attached to the cloth (23,31), through which loops a tube or profile can be slid.

3. A caravan according to claim 1 or 2, characterized in that the cloth (23,31) and the tubes or profiles are at least partly interconnected by straps attached to the cloth.

4. A caravan according to any one of the preceding claims, characterized in that the cloth (23,31) and the tubes or profiles are at least partly interconnected in that an edge (32) of the cloth has been folded over a profile portion or tube portion and subsequently fastened to the cloth again by fastening means suitable for that purpose.

5. A caravan according to any one of the preceding claims, characterized by at least one T-shaped configuration (14,30) of tubes or profiles, with the free end of a transverse tube (30) or the transverse profile attached to a wall of a longitudinal tube (14) or longitudinal profile, the free end of the transverse tube (30) or transverse profile comprising a support (35) extending transversely thereto along the longitudinal tube (14) or longitudinal profile, said support (35) having a surface facing the longitudinal tube (14) or longitudinal profile, said surface having a bent shape so as to be capable of receiving the longitudinal tube or the longitudinal profile, whilst, at least at the T-shaped configuration, an edge strip (32) of the cloth (31) is folded over the longitudinal tube (14) or the longitudinal profile and cloth material is disposed between the support (35) and the longitudinal tube (14) or the longitudinal profile and the support (35) is fixed by means of screws (36) extending through the cloth material and into the wall of the longitudinal tube (14) or the longitudinal profile.

6. A caravan according to any one of the preceding claims, characterized in that the cloth (23,31) is canvas.

7. A caravan according to any one of the preceding claims, characterized in that the cloth (23,31) comprises a layer of insulating material.

8. A caravan according to any one of the preceding claims, characterized in that the drawbar (3) is detachably or collapsibly mounted on the chassis (2,18,17;41,42).

9. A caravan according to any one of the preceding claims, constructed as a folding caravan, wherein the body consists of a box (6) capable of accommodating a folded assembly of tent cloth and tent poles, said assembly being adapted to be unfolded to form a camping shelter, characterized in that the box comprises a plurality of longitudinally extending tubes or profiles (8,9) having upwardly bent ends (12,13) and a plurality of transversely extending tubes or profiles (10,11) having upwardly bent ends, whilst a substantially rectangular circumferential frame (14) is provided, which frame (14) is composed of tubes or profiles, has rounded corners, can be taken apart and is detachably connected to the edges of a tub-shaped cloth (15), the rectangular frame (14) being detachably mounted on the upwardly bent ends (12,13) of the longitudinally and transversely extending tubes or profiles.

10. A caravan according to claim 9, characterized in that in mounted condition the tub-shaped cloth (15) is suspended within the longitudinally and transversely extending tubes or profiles (8,9,10,11) and the upwardly bent ends (12,13) thereof.

11. A caravan according to claim 9 or 10, characterized by a cover (20) constructed of a substantially rectangular frame (21) with rounded corners, constructed of tubes or profiles, said frame being detachably connected to a cloth (23) for forming a closed panel.

12. A caravan according to claim 11, characterized in that the cloth (23) of the cover (20) has an edge (24) depending on the outside along the rectangular frame (21).

13. A caravan according to claim 11 or 12, characterized in that the frame (21) of the cover (20) is hingedly mounted on the substantially rectangular frame (14) of the box (6).

14. A caravan according to any one of claims 1-8, characterized in that the frame (40) is at least partly constructed of a plurality of profiles, between which cloth can be fixed.

15. A caravan according to any one of the preceding claims, characterized in that a pliable plate material (62) is used instead of cloth.

16. A caravan according to claim 15, characterized in that the pliable plate material (62) can be rolled up.

17. A caravan according to claim 15 or 16, characterized in that the pliable plate material is attached to profiles by at least two longitudinal edges.

18. A caravan according to claim 17, characterized in that the plate material (62) is fixed between two profiles (60,61) by means of transverse ribs (64), of which the ends are detachably connected to the profiles (60,61).

19. A caravan according to any one of the preceding claims, characterized in that the closed body surfaces are formed by panels detachably connected to each other and to the chassis (2,17,18;41,42).

20. A trailer comprising a chassis (2,17,18) and a box (6), characterized in that the box (6) is constructed according to any one of claims 9-13.

21. A body, constructed of a demountable frame (8-14;21;40) of tubes and/or profiles and cloth (23,31), or pliable plate material (62) suitable for a caravan or trailer according to any one of the preceding claims.

## Patentansprüche

1. Wohnwagen (1) mit einem mit einer Deichsel (3) und Rädern (5) versehenen Chassis (2,18,17;41,42) und einer auf dem Chassis aufgesetzten Karosserie (6;40), welche Karosserie ein Gerippe (8-14;21;40) aus Rohren und/oder Profilen aufweist und ein geeignetes Tuch (23,31), das mindestens teilweise an dem Gerippe lösbar befestigt ist, um geschlossene Karosserieflächen zu bilden, wobei die Karosserie im Gebrauch lösbar auf dem Chassis aufgesetzt ist, dadurch gekennzeichnet, daß das Gerippe (8-14;21;40) aus Rohren und/oder Profilen zusammengesetzt ist, die lösbar verbunden sind, um ein Gerippe zu bilden, das auseinandergenommen werden kann.

2. Wohnwagen nach Anspruch 1, dadurch gekennzeichnet, daß das Tuch (23,31) und die Rohre oder Profile des Gerippes (8-14;21;40) mindestens teilweise mittels am Tuch (23,31) befestigter Schlaufen (22) miteinander verbunden sind, durch welche Schlaufen ein Rohr oder Profil hindurchgeschoben werden kann.

3. Wohnwagen nach Anspruch 1 oder 2, dadurch gekennzeichnet, daß das Tuch (23,31) und die Rohre oder Profile mindestens teilweise durch am Tuch befestigte Riemchen miteinander verbunden sind.

4. Wohnwagen nach einem der vorhergehenden Ansprüche, dadurch gekennzeichnet, daß das Tuch (23,31) und die Rohre oder Profile mindestens teilweise dadurch miteinander verbunden sind, daß ein Rand (32) des Tuches um einen Profil- oder Rohrteil geschlagen und anschließend wieder mit dazu geeigneten Befestigungsmitteln am Tuch befestigt ist.

5. Wohnwagen nach einem der vorhergehenden Ansprüche, gekennzeichnet durch mindestens eine T-förmige Anordnung (14,30) aus Rohren oder Profilen, wobei das freie Ende eines Querrohres (30) oder des Querprofils an einer Wand eines Längsrohres (14) oder Längsprofils befestigt ist, welches freie Ende des Querrohres (30) oder Querprofils eine Stütze (35) aufweist, die sich quer dazu an dem Längsrohr (14) oder Längsprofil entlang erstreckt, welche Stütze (35) mit einer dem Längsrohr (14) oder Längsprofil zugekehrten Fläche versehen ist, welche Fläche eine gebogene Form aufweist, um das Längsrohr oder das Längsprofil aufnehmen zu können, während, wenigstens im Bereich der T-förmigen Anordnung, ein Randstreifen (32) des Tuches (31) um das Längsrohr (14) oder das Längsprofil geschlagen ist und sich zwischen der Stütze (35) und dem Längsrohr (14) oder dem Längsprofil Tuchmaterial befindet, wobei die Stütze (35) mittels sich durch das Tuchmaterial und bis in die Wand des Längsrohres (14) oder des Längsprofils erstreckender Schrauben (36) festgesetzt ist.

6. Wohnwagen nach einem der vorhergehenden Ansprüche, dadurch gekennzeichnet, daß das Tuch (23,31) Kanevas ist.

7. Wohnwagen nach einem der vorhergehenden Ansprüche, dadurch gekennzeichnet, daß das Tuch (23,31) eine Schicht aus Isoliermaterial enthält.

8. Wohnwagen nach einem der vorhergehenden Ansprüche, dadurch gekennzeichnet, daß die Deichsel (3) lösbar oder zusammenklappbar an dem Chassis (2,18,17;41,42) angeordnet ist.

9. Wohnwagen nach einem der vorhergehenden Ansprüche, ausgebildet als zusammenklappbarer Wohnwagen, wobei die Karosserie aus einem Kasten (6) besteht, der eine zusammengeklappte Anordnung aus Zelttuch und Zeltstöcken aufnehmen kann, welche Anordnung auseinandergeklappt werden kann, um eine Zeltunterkunft zu bilden, dadurch gekennzeichnet, daß der Kasten mehrere sich in Längsrichtung erstreckende Rohre oder Profile (8,9) mit aufwärtsgebogenen Enden (12,13) und mehrere sich in Querrichtung erstreckende Rohre oder Profile (10,11) mit aufwärtsgebogenen Enden enthält, wobei ein im wesentlichen rechteckiger Umfangsrahmen (14) vorgesehen ist, welcher Rahmen (14) aus Rohren oder Profilen besteht, abgerundete Ecken aufweist, abgenommen werden kann und lösbar mit den Rändern eines wannenförmigen Tuches (15) verbunden ist, wobei der rechteckige Rahmen (14) lösbar auf den aufwärtsgebogenen Enden (12,13) der sich in Längs- und Querrichtung erstreckenden Rohre oder Profile aufgesetzt ist.

10. Wohnwagen nach Anspruch 9, dadurch gekennzeichnet, daß im angeordneten Zustand das wannenförmige Tuch (15) innerhalb sich in Längs- und Querrichtung erstreckender Rohre oder Profile (8,9,10,11) und ihrer aufwärtsgebogenen Enden (12,13) hängt.

11. Wohnwagen nach Anspruch 9 oder 10, gekennzeichnet durch einen Deckel (20), aufgebaut aus einem aus Rohren oder Profilen zusammengesetzten im wesentlichen rechteckigen Rahmen (21) mit abgerundeten Ecken, welcher Rahmen lösbar mit einem Tuch (23) verbunden ist, um ein geschlossenes Feld zu bilden.

12. Wohnwagen nach Anspruch 11, dadurch gekennzeichnet, daß das Tuch (23) des Deckels (20) einen an der Außenseite an dem rechteckigen Rahmen (21) entlang herabhängenden Rand (24) aufweist.

13. Wohnwagen nach Anspruch 11 oder 12, dadurch gekennzeichnet, daß der Rahmen (21) des Deckels (20) gelenkig an dem im wesentlichen rechteckigen Rahmen (14) des Kastens (6) angeordnet ist.

14. Wohnwagen nach einem der Ansprüche 1 bis 8, dadurch gekennzeichnet, daß das Gerippe (40) wenigstens teilweise aus mehreren Profilen aufgebaut ist, zwischen denen Tuch befestigt werden kann.

15. Wohnwagen nach einem der vorhergehenden Ansprüche, dadurch gekennzeichnet, daß statt Tuch ein biegsames Plattenmaterial (62) verwendet wird.

16. Wohnwagen nach Anspruch 15, dadurch gekennzeichnet, daß das biegsame Plattenmaterial (62) aufgerollt werden kann.

17. Wohnwagen nach Anspruch 15 oder 16, dadurch gekennzeichnet, daß das biegsame Plattenmaterial mit mindestens zwei Längsrändern an Profilen befestigt ist.

18. Wohnwagen nach Anspruch 17, dadurch gekennzeichnet, daß das Plattenmaterial (62) zwischen zwei Profilen (60,61) mittels Querrippen (64) festgesetzt ist, deren Enden lösbar mit den Profilen (60,61) verbunden sind.

19. Wohnwagen nach einem der vorhergehenden Ansprüche, dadurch gekennzeichnet, daß die geschlossenen Karosserieflächen durch lösbar miteinander und mit dem Chassis (2,18,17;41,42) verbundene Felder gebildet sind.

20. Anhänger mit einem Chassis (2,17,18) und einem Kasten (6), dadurch gekennzeichnet, daß der Kasten (6) nach einem der vorhergehenden Ansprüche 9 bis 13 aufgebaut ist.

21. Karosserie, aufgebaut aus einem auseinandernehmbaren Gerippe (8-14;21;40) aus Rohren und/oder Profilen und Tuch (23,31) oder biegsamem Plattenmaterial (62), geeignet für einen Wohnwagen oder Anhänger nach einem der vorhergehenden Ansprüche.

## Revendications

1. Caravane (1) comprenant un châssis (2, 18, 17; 41, 42) doté d'une barre d'attelage (3) et de roues (5) et un corps (6; 40) monté sur le châssis, lequel corps possède un cadre (8-14;21;40) de tubes et/ou profils et une toile appropriée (23, 31) qui est fixée, du moins en partie, au cadre de manière amovible pour former des surfaces fermées du corps, le corps en service étant fixé au châssis de manière amovible, caractérisée en ce que le cadre (8 - 14; 21; 40) est composé de tubes et/ou profils qui sont raccordés de manière amovible afin de former un cadre qui peut être démonté.

2. Caravane selon la revendication 1, caractérisée en ce que la toile (23; 31) et les tubes ou profilés du cadre (8-14; 21; 40) sont interconnectés, du moins en partie, au moyen de boucles (22) fixées à la toile (23; 31) dans lesquelles un tube ou profilé peut être glissé.

3. Caravane selon la revendication 1 ou 2, caractérisée en ce que la toile (23, 31) et les tubes ou profils sont interconnectés, du moins en partie, par des attaches fixées à la toile.

4. Caravane selon l'une quelconque des revendications précédentes, caractérisée en ce que la toile (23, 31) et les tubes ou profils sont interconnectés, du moins en partie, par le fait qu'un bord (32) de la toile a été replié sur une partie du profil ou du tube et ensuite fixé à nouveau sur la toile par des moyens de fixation appropriés à cet effet.

5. Caravane selon l'une quelconque des revendications précédentes, caractérisée par au moins une configuration en forme de T (14, 30) des tubes ou profils, l'extrémité libre du tube transversal étant fixée à une paroi d'un tube longitudinal 14 ou d'un profil longitudinal, l'extrémité libre du tube transversal (30) ou du profil transversal comprenant un support (35) s'étendant transversalement par rapport à lui le long du tube longitudinal (14) ou profil longitudinal, ledit support (35) possédant une surface tournée vers le tube longitudinal (14) ou profil longitudinal, ladite surface possédant une forme flèche de manière à pouvoir recevoir le tube longitudinal ou le profil longitudinal et la toile est disposée entre le support (35) et le tube longitudinal (14) ou le profil longitudinal et le support (35) est fixé au moyens de vis (36) traversant la toile et pénétrant dans la paroi du tube longitudinal (14) ou profil longitudinal.

6. Caravane selon l'une quelconque des revendications précédentes, caractérisée en ce que la toile (23, 31) est une toile à voile.

7. Caravane selon l'une quelconque des revendications précédentes, caractérisée en ce que la toile (23, 31) se compose d'une couche de matériau isolant.

8. Caravane selon l'une quelconque des revendications précédentes, caractérisée en ce que la barre d'attelage (3) est fixée de manière amovible ou pliable sur le châssis (2, 18, 17; 41, 42).

9. Caravane selon l'une quelconque des revendications précédentes, conçue comme une caravane pliante dans laquelle le corps se compose d'un boîtier (6) capable de loger un ensemble pliant de la toile de tente et des piquets de tente, ledit ensemble étant destiné à être déplié pour former une tente de camping, caractérisée en ce que le boîtier se compose de plusieurs tubes ou profils (8, 9) s'étendant longitudinalement et possédant des extrémités fléchies vers le haut (12, 13) et plusieurs tubes ou profils (10, 11) s'étendant transversalement, tandis qu'un cadre (14) périphérique essentiellement rectangulaire est prévu, lequel cadre (14) est composé de tubes ou profilés, possède des coins arrondis, peut être séparé et est raccordé de manière amovible aux bords d'une toile (15) en forme de baquet, le cadre rectangulaire (14) étant fixé de manière amovible sur les extrémités fléchies vers le haut (12, 13) des tubes ou profils s'étendant longitudinalement et transversalement.

10. Caravane selon la revendication 9, caractérisée en ce qu'à l'état monté, la toile (15) en forme de baquet est suspendue dans les tubes ou profils (8, 9, 10, 11) s'étendant transversalement et les extrémités fléchies vers le haut (12, 13) de ceux-ci.

11. Caravane selon l'une des revendications 9 ou 10, caractérisée par un couvercle (20) composé d'un cadre essentiellement rectangulaire (21) aux coins arrondis composés de tubes ou profils, ledit cadre étant raccordé de manière amovible à une toile (23) pour former un panneau fermé.

12. Caravane selon la revendication 11, caractérisée en ce que la toile (23) du couvercle (20) possède un bord (24) pendant de l'extérieur le long du cadre rectangulaire (21).

13. Caravane selon la revendication 11 ou 12, caractérisée en ce que le cadre (21) du couvercle (20) est fixé de manière articulée sur le cadre (14) essentiellement rectangulaire du boîtier (6).

14. Caravane selon l'une quelconque des revendications 1 à 8, caractérisée en ce que le cadre (40) est composé, du moins en partie, de plusieurs profils entre lesquels une toile peut être fixée.

15. Caravane selon l'une quelconque des revendications précédentes, caractérisée en ce qu'une plaque pliante (62) est utilisée à la place d'une toile.

16. Caravane selon la revendication 15, caractérisée en ce que la plaque pliante (62) peut être enroulée.

17. Caravane selon la revendication 15 ou 16, caractérisée en ce que la plaque pliante est fixée aux profils par au moins deux bords longitudinaux.

18. Caravane selon la revendication 17, caractérisée en ce que la plaque (62) est fixée entre deux profils (60, 61) au moyen de nervures transversales (64) dont les extrémités sont fixées à pivotement aux profilés (60, 61).

19. Caravane selon l'une quelconque des revendications précédentes, caractérisée en ce que les surfaces fermées du corps sont formées par des panneaux fixés de manière amovible l'un à l'autre et au châssis (2, 17, 18; 41, 42).

20. Remorque comprenant un châssis (2, 17, 18) et un boîtier (6), caractérisée en ce que le boîtier (6) est composé selon l'une quelconque des revendications 9 à 13.

21. Corps composé d'un cadre démontable (8-14; 21; 40) de tubes et/ou profiles et d'une toile (23,31) ou de plaques pliantes (62) destiné à une caravane ou une remorque selon l'une quelconque des revendications précédentes.
